# EUROPEAN PATENT SPECIFICATION

(11) **EP 3 342 284 B1**
(45) Date of publication and mention of the grant of the patent: **26.01.2022**
(21) Application number: 17209264.5
(22) Date of filing: 21.12.2017
(51) Int. Cl.: A01K 63/04, C02F 1/74, B01D 19/00, B01F 3/04, C02F 1/20

(54) **AERATOR AND CARBON DIOXIDE SEPARATOR**
BELÜFTER UND KOHLENDIOXIDABSCHEIDER
AÉRATEUR ET SÉPARATEUR DE DIOXYDE DE CARBONE

(30) Priority: 29.12.2016 SE 1651751
(43) Date of publication of application: 04.07.2018
(73) Proprietor: NP Innovation AB, 213 76 Malmö (SE)
(72) Inventor: PERSSON, Nils-Åke, 211 46 Malmö (SE)
(74) Representative: AWA Sweden AB

(56) References cited:
- EP-A1- 0 503 676
- EP-A1- 1 070 022
- GB-A- 1 559 018
- US-A1- 2014 238 238
- US-B2- 8 349 191

## Description

### Field of the Invention

The present invention relates to a device for aeration of and separation of carbon dioxide from a fluid.

The present invention also relates to a system and a method for aeration of and separation of carbon dioxide from a fluid.

### Background Art

For fish breeding in fish tanks with a focus on sustainability it is of utmost importance that the system is a closed system, which minimizes the discharge to the surrounding environment.

For traditional closed systems, the water in the fish tanks is lead out and is conventionally then filtered in a drum filter, a disc filter or a bio-filter system for cleaning of the water. The water is then often aerated and the carbon dioxide is separated from the water before it is returned to the fish tank.

Traditional aerators and carbon dioxide separators usually consist of an air feed system which creates bubbles and puts the water in motion. This type of air feed system, however, suffers from the drawback that they have a low degree of efficiency. They also suffer from the drawback of strong biological growth on the surfaces of the aerator.

Other aerators of known type may be made of blocks of thin plastic, which comprise built-in passages to create thin flows of water meeting the surrounding air. These blocks are superimposed, creating a stack, but suffer from the drawback that the blocks are not kept clean, but get covered with biological growth over time, resulting in an efficacy that is decreasing with time due to the extended biological growth.

### Summary of the Invention

The aim of the present invention is thus to solve the problems mentioned above with aerators and carbon dioxide separators suffering from biological growth and low efficacy, which is decreasing over time.

According to the present invention this is done by providing a device for aeration of and separation of carbon dioxide from a fluid according to claim 1.

With reference to what has been mentioned above, aerators known today do not incorporate aeration and separation of carbon dioxide from a fluid within one device or system. For instance, US2633343 describes a solution related to a fluid mixing device and more particularly to a device for producing a stream of liquid containing air bubbled throughout the stream. Furthermore, US6270022 describes an aerating device for a multiple jet shower. The purpose of said aerating device is to produce a more pleasing sensation. Another device for aeration is disclosed in EP0503676A1.

In one embodiment said at least one screen frame is of triangular, rectangular, square, pentagonal, hexagonal, heptagonal, and/or octagonal shape, preferably rectangular or square shape.

According to another embodiment the side of the screen gear with the smaller screen window/windows faces the fluid when the fluid first meets the screen gear.

In one embodiment the screen gears of the device are separated by a distance of 45 mm.

In a further embodiment at least one side of said at least one screen window has a length of 10-50 mm, preferably 20 mm.

In a further embodiment, all sides of said at least one screen window has a length of 10-50 mm, preferably 20 mm.

According to one embodiment of the present invention said at least two screen gears are separated by a spacer device.

In another embodiment the screen gears are mounted on a rack.

The screen gears according to the present invention preferably consist of non-porous substrates, preferably plastic or metal.

In one embodiment the fluid is water, preferably water from fish tanks.

In another embodiment the total surface area of the screen windows on the screen gear, on the side of the screen gear with smaller area of said screen windows when the screen windows are tapered, or if the screen windows are not tapered - any side of the screen gear 101, is preferably 60-90 % of the total area of the screen gear 101, more preferably around 70 %.

The present invention also relates to a system for aeration of and separation of carbon dioxide from a fluid, which system comprises a device according to the present invention.

In one embodiment, the system comprises a fan for removal of the separated carbon dioxide from the system.

In a further embodiment the system further comprises at least one inlet chute distributing the fluid homogenously over the screen gear.

The present invention further relates to a method for aeration and separation of carbon dioxide from a fluid, using a device according to the present invention, comprising the steps of providing a fluid to the device, allowing the fluid to be transported through the device by gravity, collecting the fluid, having a decreased amount of carbon dioxide and/or an increased amount of oxygen.

### Brief Description of the Drawings

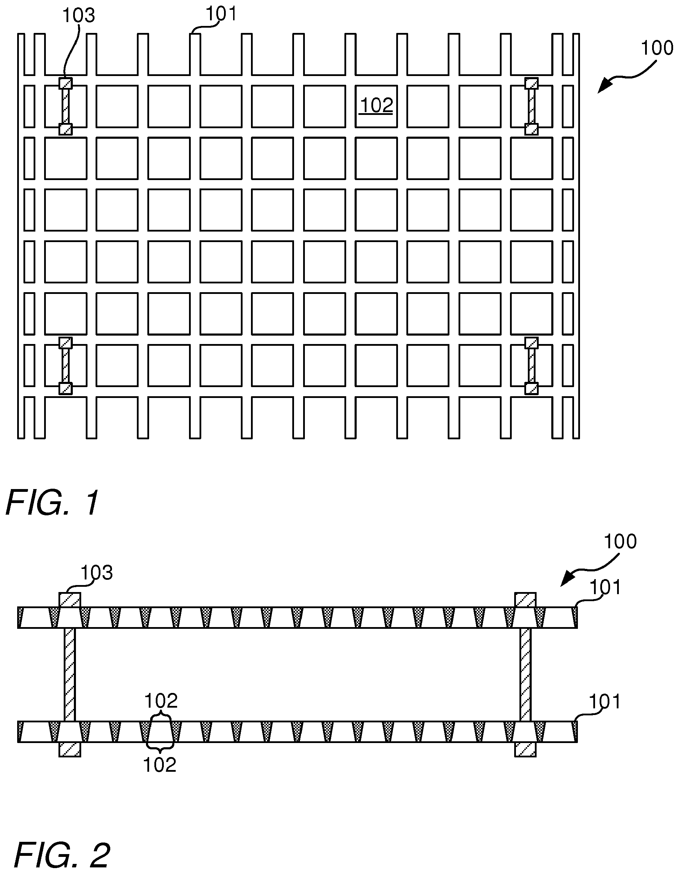

Fig. 1 shows a schematic design of a device for aeration and carbon dioxide separation according to the invention, where a screen gear comprising several screen windows is seen from above.
Fig. 2 shows a side view of a schematic design of a device according to the present invention, comprising two screen gears, where the gears are separated by spacer devices.

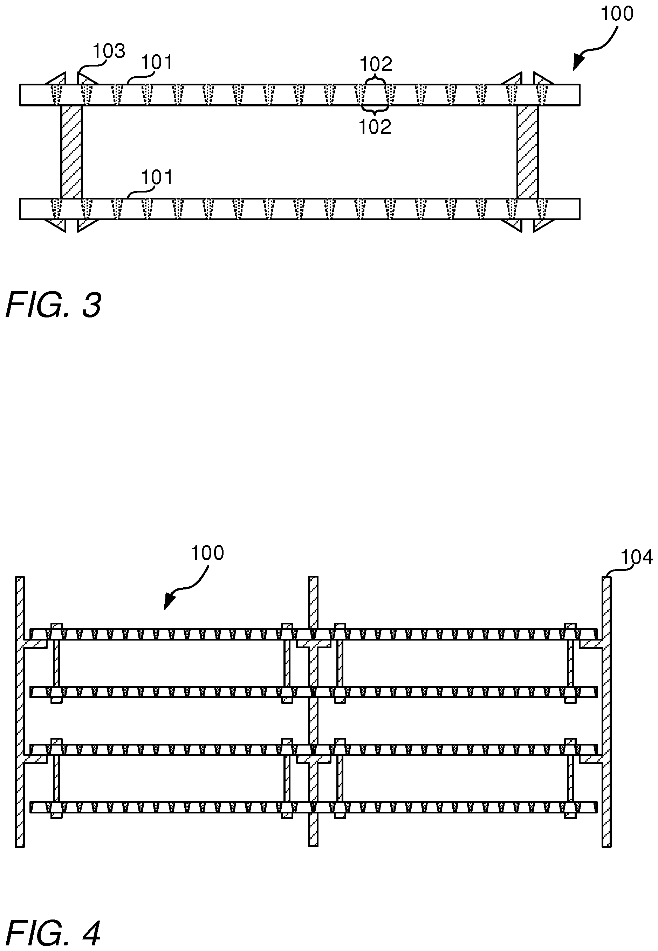

Fig. 3 shows a side view of a cross-section of schematic design of a device according to the present invention, comprising two screen gears, where the gears are separated by spacer devices.
Fig. 4 shows a side view of a schematic design of a device according to the present invention, comprising two screen gears, where the gears are separated by spacer devices and also mounted on racks.

### Detailed Description of the Invention

As stated above, the present invention relates to a device 100 for aeration of and carbon dioxide separation from a fluid, preferably water, especially water from fish tanks to be recirculated to the tanks. The device 100 comprises at least two screen gears, more preferably at least three, more preferably at least four, at least five, at least six, at least seven, at least eight, at least nine, at least 10, at least 15, at least 20, at least 30 or more, screen gears 101. The effect of the aeration and carbon dioxide separation increases with an increased number of screen gears 101, where a device 100 comprising for instance ten screen gears 101 gives a better aeration of, and carbon dioxide separation from, the fluid, e.g. water, than a device comprising two screen gears 101. Each screen gear 101 comprises several screens windows, preferably at least three, more preferably at least four, at least five, at least six, at least seven, at least eight, at least nine, at least 10, at least 20, at least 30, at least 40, at least 50, at least 60, at least 70, at least 80, at least 90, at least 100, at least 150, at least 200, at least 250, at least 500, at least 1000, at least 5000 or more, screen windows 102. The screen windows 102 may be of triangular, rectangular, square, pentagonal, hexagonal, heptagonal, and/or octagonal shape, preferably rectangular or square shape. The screen gears 101 are separated from each other by a distance of 10-250 mm. The screen gears 101 may be separated by a spacer device 103, or may be mounted on a rack 104, where they are placed separated from each other according to the preferred distance above. The screen gears 101 are preferably placed perpendicular, or essentially perpendicular, in relation to the direction of the flow of fluid that hits and passes them.

The size of said screen windows 102 are such that at least one side of the screen windows (102) has a length of 10-50 mm, preferably 20 mm.

The screen windows 102, when being of square shape, preferably have a dimension of between 10x10 mm to 50x50 mm, with a preferred dimension of 20x20 mm. The depth of each screen window is preferably within the range of 5-40 mm.

The area of the screen window 102 is larger on one side of the screen gear 101 than on the other side of the screen gear 101. The side of the screen gear 101 with the smaller area of said screen window/windows 102 preferably faces the fluid when the fluid first meets the screen gear 101, i.e. the smaller area of the screen window 102 faces upwards, while the larger area of the screen window 102 faces downwards. The fact that the screen windows 102 are tapered in accordance with the above creates a diffusor effect that contributes to a higher volume of throughput per surface area of the device 100.

The total surface area of the screen windows 102 on the screen gear 101, on the side of the screen gear 101 with the smaller area of said screen windows 102 when the screen windows are tapered, or if the screen windows 102 are not tapered - any side of the screen gear 101, is preferably 60-90 % of the total area of the screen gear 101, more preferably around 70 %.

The screen gears 100 are preferably made of non-porous substrates, preferably plastic or metal, to avoid penetration of fluid, such as water, and to make it more difficult for biological growth to occur. Biological growth on the device 100 is also hindered by the strong turbulence created by the stream of fluid, preferably water.

To obtain an optimal efficiency, the incoming flow of fluid, preferably water, is distributed through specific inlet chutes constructed to distribute the fluid evenly over the device 100. The flow of fluid, preferably water, from the inlet chutes and on to the device 100, which device comprises at least two screen gears 101, is preferably done through perforated chutes so that the water is distributed evenly on the device 100.

As the fluid flows down through the screen gears 101 of the device 100, the flow of fluid drags a lot of air along, which air is mixed with the fluid upon the impact of the fluid with the screen gears 101, on the fluid's way down to the bottom of the device 100.

Preferably, the chutes delivering fluid to the device 100 according to the present invention are more narrow/smaller than the width of the screen gears 101, creating free spaces along the sides to allow for the fluid to, without hindrance, drag air into the device 100. Preferably, the chute delivering fluid to the device 100 covers about 60 % of the area of the screen gear 101 closest to the chute, and the remaining about 40 % of the surface of the screen gear 101 is free, allowing for the air to be drawn down through the device 100.

The strong turbulence and the amount of free fluid surfaces, preferably water droplets, that are created as the fluid meets the screen gears 101 on its way down through the device 100 gives a very efficient aeration, and at the same time efficient release of carbon dioxide. The carbon dioxide is preferably removed from the device 100 along the side of the screen gears 101, or, alternatively, at the bottom of the device 100, after passing the screen gears 101. It is of great importance that the premises where the device 100 is situated are well ventilated, or that the carbon dioxide that has been separated from the fluid is led through a ventilation system and thereby removed from the premises. A fan may be used to remove separated carbon dioxide from the device 100.

To avoid that small droplets of fluid are transferred out/lost from the stream of fluid, the air that has passed the fan may be led through a droplet separator, removing the droplets, allowing this to be returned to the flow of fluid, reducing the effect of the humidity on the surrounding system.

The amount of carbon dioxide that is separated from the fluid by the device 100 according to the present invention is about 45 - 70 % of the carbon dioxide present in the fluid, and is typically 60 % of the carbon dioxide in the fluid.

## Claims

1. A device (100) for aeration of and separation of carbon dioxide from a fluid, said device comprising at least two screen gears (101 comprising several screen windows (102) in the form of openings, wherein the area of a screen window (102) is larger on one side of the screen gear (101) than on the other side of the screen gear (101) and wherein the at least two screen gears (101) are separated by a distance of 10-250 mm.

2. A device (100) according to claim 1, wherein said at least one screen window (102) is of triangular, rectangular, square, pentagonal, hexagonal, heptagonal, and/or octagonal shape, preferably rectangular or square shape.

3. A device (100) according to claim 1 or 2, wherein at least one side of said at least one screen window (102) has a length of 10-50 mm, preferably 20 mm.

4. A device (100) according to any one of the previous claims, wherein said at least two screen gears (101), are separated by a spacer device (103).

5. A device (100) according to any one of the previous claims, wherein the screen gears are mounted on a rack (104).

6. A device (100) according to any one of the previous claims, wherein said at least two screen gears 101, consist of non-porous substrates, preferably plastic or metal.

7. A device (100) according to any of the preceding claims, wherein the side of the screen gear (101) with smaller area has an area which is 60-90 % of the area of the screen gear (101) on the side with larger area.

8. A system for aeration of and separation of carbon dioxide from a fluid, comprising a device (100) according to any one of the previous claims and further comprising a fan for removal of the separated carbon dioxide from the system.

9. A system according to claim 8, further comprising at least one inlet chute distributing the fluid homogenously over said the device (100).

10. Method for aeration and separation of carbon dioxide from a fluid, using a device (100) according to any one of claims 1 to 7, comprising the steps of
providing a fluid to the device,
allowing the fluid to be transported through the device by gravity,
collecting the fluid, having a decreased amount of carbon dioxide and/or an increased amount of oxygen.

11. Method according to claim 10, wherein the side of the screen gears (101) with the smaller screen windows (102) are arranged to face the fluid when the fluid first meets the screen gears (101).

12. Method according to claim 10 or 11, wherein the fluid is water, preferably water from fish tanks.

## Patentansprüche

1. Vorrichtung (100) zur Durchlüftung eines und Abtrennung von Kohlendioxid aus einem Fluid(s), wobei die Vorrichtung wenigstens zwei Siebeinrichtungen (101) umfasst, die mehrere Siebfenster (102) in der Form von Öffnungen umfassen, wobei die Fläche eines Siebfensters (102) an einer Seite der Siebeinrichtung (101) größer als an der anderen Seite der Siebeinrichtung (101) ist und wobei die wenigstens zwei Siebeinrichtungen (101) um einen Abstand von 10-250 mm voneinander getrennt sind.

2. Vorrichtung (100) gemäß Anspruch 1, wobei das wenigstens eine Siebfester (102) von dreieckiger, rechteckiger, quadratischer, fünfeckiger, sechseckiger, siebeneckiger und/oder achteckiger Form, vorzugsweise rechteckiger oder quadratischer Form, ist.

3. Vorrichtung (100) gemäß Anspruch 1 oder 2, wobei wenigstens eine Seite des wenigstens einen Siebfensters (102) eine Länge von 10-50 mm, vorzugsweise 20 mm, aufweist.

4. Vorrichtung (100) gemäß einem der vorstehenden Ansprüche, wobei die wenigstens zwei Siebeinrichtungen (101) durch eine Abstandshaltervorrichtung (103) getrennt sind.

5. Vorrichtung (100) gemäß einem der vorstehenden Ansprüche, wobei die Siebeinrichtungen an einem Gestell (104) angebracht sind.

6. Vorrichtung (100) gemäß einem der vorstehenden Ansprüche, wobei die wenigstens zwei Siebeinrichtungen (101) aus nichtporösen Substraten, vorzugsweise Kunststoff oder Metall, bestehen.

7. Vorrichtung (100) gemäß einem der vorstehenden Ansprüche, wobei die Seite der Siebeinrichtung (101) mit der kleineren Fläche eine Fläche aufweist, die 60-90 % der Fläche der Siebeinrichtung (101) an der Seite mit der größeren Fläche beträgt.

8. System zur Durchlüftung eines und Abtrennung von Kohlendioxid aus einem Fluid(s), umfassend eine Vorrichtung (100) gemäß einem der vorstehenden Ansprüche und ferner umfassend ein Gebläse zum Entfernen des abgetrennten Kohlendioxids aus dem System.

9. System gemäß Anspruch 8, ferner umfassend wenigstens eine Einlassrinne, die das Fluid homogen über die Vorrichtung (100) verteilt.

10. Verfahren zur Durchlüftung eines und Abtrennung von Kohlendioxid aus einem Fluid(s) unter Verwendung einer Vorrichtung (100) gemäß einem der Ansprüche 1 bis 7, umfassend die Schritte
Zuführen eines Fluids zu der Vorrichtung,
Erlauben, dass das Fluid durch Schwerkraft durch die Vorrichtung befördert wird,
Sammeln des Fluids, das eine verringerte Menge an Kohlendioxid und/oder eine erhöhte Menge an Sauerstoff aufweist.

11. Verfahren gemäß Anspruch 10, wobei die Seite der Siebeinrichtung (101) mit den kleinere Siebfenstern (102) dafür angeordnet ist, zu dem Fluid zu zeigen, wenn das Fluid zuerst auf die Siebeinrichtungen (101) trifft.

12. Verfahren gemäß Anspruch 10 oder 11, wobei das Fluid Wasser, vorzugsweise Wasser aus Fischtanks, ist.

## Revendications

1. Dispositif (100) pour l'aération d'un fluide et la séparation de dioxyde de carbone de celui-ci, ledit dispositif comprenant au moins deux tamis (101) comprenant plusieurs fenêtres de tamis (102) sous la forme d'ouvertures, la superficie d'une fenêtre de tamis (102) étant plus grande sur un côté du tamis (101) que sur l'autre côté du tamis (101), et les au moins deux tamis (101) étant séparés par une distance de 10-250 mm.

2. Dispositif (100) selon la revendication 1, dans lequel ladite au moins une fenêtre de tamis (102) est de forme triangulaire, rectangulaire, carrée, pentagonale, hexagonale, heptagonale et/ou octogonale, de préférence de forme rectangulaire ou carrée.

3. Dispositif (100) selon la revendication 1 ou 2, dans lequel au moins un côté de ladite au moins une fenêtre de tamis (102) a une longueur de 10-50 mm, de préférence 20 mm.

4. Dispositif (100) selon l'une quelconque des revendications précédentes, dans lequel lesdits au moins deux tamis (101) sont séparés par un dispositif d'espacement (103).

5. Dispositif (100) selon l'une quelconque des revendications précédentes, dans lequel les tamis sont montés sur un châssis (104).

6. Dispositif (100) selon l'une quelconque des revendications précédentes, dans lequel lesdits au moins deux tamis (101) consistent en des substrats non poreux, de préférence en plastique ou métal.

7. Dispositif (100) selon l'une quelconque des revendications précédentes, dans lequel le côté du tamis (101) avec la plus petite superficie a une superficie qui représente 60-90 % de la superficie du tamis (101) sur le côté avec la plus grande superficie.

8. Système pour l'aération d'un fluide et la séparation de dioxyde de carbone de celui-ci, comprenant un dispositif (100) selon l'une quelconque des revendications précédentes et comprenant en outre un ventilateur pour le retrait du dioxyde de carbone séparé du système.

9. Système selon la revendication 8, comprenant en outre au moins une goulotte d'entrée distribuant le fluide de façon homogène par-dessus ledit dispositif (100) .

10. Procédé pour l'aération d'un fluide et la séparation de dioxyde de carbone de celui-ci, utilisant un dispositif (100) selon l'une quelconque des revendications 1 à 7, comprenant les étapes suivantes :
fournir un fluide au dispositif,
laisser le fluide être transporté à travers le dispositif par gravité,
collecter le fluide, ayant une quantité réduite de dioxyde de carbone et/ou une quantité accrue d'oxygène.

11. Procédé selon la revendication 10, dans lequel le côté des tamis (101) avec les plus petites fenêtres de tamis (102) est disposé pour faire face au fluide quand le fluide rencontre pour la première fois les tamis (101).

12. Procédé selon la revendication 10 ou 11, dans lequel le fluide est de l'eau, de préférence de l'eau provenant de bassins à poissons.
